# FASCICULE DE BREVET EUROPEEN

(11) **EP 3 104 127 B1**
(45) Date de publication et mention de la délivrance du brevet: **21.11.2018**
(21) Numéro de dépôt: 16173762.2
(22) Date de dépôt: 09.06.2016
(51) Int. Cl.: G01D 4/00, G01R 19/25, H04L 29/08, H04L 12/28, H04L 29/06, H04L 29/12

(54) **PROCÉDÉ DE CONTRÔLE DE L'ACCÈS À DES DONNÉES RELATIVES À UNE INSTALLATION ÉLECTRIQUE, PRODUIT PROGRAMME D'ORDINATEUR ET SUPPORT D'INFORMATIONS ASSOCIÉS**
VERFAHREN ZUM KONTROLLIEREN DES ZUGANGS ZU DATEN EINER ELEKTRISCHEN ANORDNUNG, ENTSPRECHENDES COMPUTERPROGRAMMPRODUKT UND ENTSPRECHENDER DATENTRÄGER
A METHOD FOR CONTROLLING ACCESS TO DATA RELATING TO AN ELECTRICAL SYSTEM, ASSOCIATED COMPUTER PROGRAM PRODUCT AND DATA MEDIUM

(30) Priorité: 10.06.2015 FR 1555286
(43) Date de publication de la demande: 14.12.2016
(73) Titulaire: Schneider Electric Industries SAS, 92500 Rueil-Malmaison (FR)
(72) Inventeur: FRELON, Benoît, 38320 BRIE ET ANGONNES (FR); PYLE, Michael, HERMITAGE, TN 37076 (US)
(74) Mandataire: Lavoix

(56) Documents cités:
- EP-A1- 1 868 355
- WO-A2-2012/092625
- KR-B1- 101 469 010

## Description

La présente invention concerne un procédé de contrôle de l'accès à des données relatives à au moins une installation électrique. L'invention concerne également un produit programme d'ordinateur et un support d'informations associés à un tel procédé de contrôle.

L'invention se situe dans le domaine des systèmes de contrôle des données. Plus précisément, il est contrôlé l'accès par un utilisateur d'une installation électrique à des données relatives à l'installation électrique à partir d'un terminal de communication.

Il est connu des systèmes dans lesquels les données sont échangées entre une unité de gestion et une plateforme relais. A titre d'exemple, les données sont des données relatives à la consommation en énergie électrique de l'installation électrique. Ainsi, les données échangées entre l'unité de gestion et la plateforme relais sont des données privées dont l'accès est à contrôler.

Dans de tels systèmes de contrôle, la plateforme relais appartient à un réseau global, tandis que l'unité de gestion appartient à un réseau local et est connectée à la plateforme relais et au réseau global via une passerelle de communication, telle qu'un routeur.

Le réseau global est un réseau qui diffère du réseau local en ce qu'il couvre une grande zone géographique, typiquement à l'échelle d'un pays, d'un continent, voire de la planète entière, tandis que le réseau local couvre une zone à une échelle géographique relativement restreinte, par exemple une salle informatique, une habitation particulière, un bâtiment ou un site d'entreprise.

Le réseau global est un réseau Internet, tandis que le réseau local est un réseau informatique tel que les terminaux qui appartiennent au réseau local s'envoient des trames au niveau de la couche de liaison sans utiliser d'accès à internet.

L'unité de gestion est généralement configurée pour transmettre régulièrement à la plateforme relais, via la passerelle de communication, les données relatives à l'installation électrique. La plateforme relais mémorise les données et associe aux données un identifiant spécifique à l'unité de gestion ayant transmis les données. Un tel système est divulgué dans WO2012/092625 A2.

L'utilisateur est apte à accéder aux données mémorisées par la plateforme relais et relatives à l'installation électrique, en transmettant à la plateforme relais, à partir du terminal de communication, une requête d'accès aux données comprenant l'identifiant spécifique de l'unité de gestion de l'installation électrique.

Cependant, lorsque l'utilisateur de l'installation électrique change, alors que la passerelle de communication et l'unité de gestion restent associées à l'installation électrique, il existe un risque que l'ancien utilisateur continue à avoir accès aux données relatives à l'installation électrique. La sécurité des données confidentielles n'est pas garantie dans un tel système.

Il existe donc un besoin pour améliorer le contrôle de l'accès aux données échangées entre une unité de gestion d'une installation électrique et une plateforme relais et qui sont mémorisées par la plateforme relais.

A cet effet, l'invention concerne un procédé de contrôle de l'accès à des données relatives à au moins une installation électrique, échangées entre une unité de gestion respective de chaque installation électrique et une plateforme relais, la plateforme relais appartenant à un réseau global de communication et chaque unité de gestion appartenant à un réseau local de communication respectif, chaque unité de gestion ayant un premier identifiant respectif, chaque unité de gestion étant reliée au réseau global de communication par une passerelle de communication respective ayant un deuxième identifiant sur le réseau global de communication, le procédé comprenant les étapes suivantes :
- l'échange d'au moins une trame entre chaque unité de gestion et la plateforme relais, chaque trame comprenant les données et le deuxième identifiant de la passerelle de communication par laquelle la trame transite,
- l'obtention pour chaque trame échangée du premier identifiant de l'unité de gestion échangeant la trame,
- la réception par la plateforme relais d'une requête d'accès aux données échangées avec la ou l'une des unités de gestion, la requête provenant d'un terminal de communication et comprenant un paramètre d'accès dépendant du premier identifiant de l'unité de gestion et un troisième identifiant, sur le réseau global, d'un élément appartenant au réseau global et étant à l'origine de la transmission de la requête sur le réseau global,
- la détermination du premier identifiant dont dépend le paramètre d'accès,
- la comparaison du troisième identifiant avec le deuxième identifiant compris dans la ou au moins l'une des trames échangées par l'unité de gestion ayant le premier identifiant déterminé,
- l'autorisation de l'accès, pour le terminal de communication, aux données incluses dans chaque trame échangée par l'unité de gestion ayant le premier identifiant déterminé, si lors de l'étape de comparaison les deuxième et troisième identifiants sont identiques.
- le procédé comprenant pour chaque unité de gestion l'étape suivante :
   - le lancement d'un compteur temporel respectif à partir d'un instant de référence respectif, et. lors de l'étape d'autorisation, l'accès aux données incluses dans chaque trame échangée par l'unité de gestion ayant le premier identifiant déterminé est également autorisé au terminal de communication, si la valeur du compteur temporel de l'unité de gestion ayant le premier identifiant déterminé est inférieure ou égale à une valeur maximale prédéterminée.

Selon des aspects avantageux de l'invention, le procédé de contrôle comprend une ou plusieurs des caractéristiques suivantes, prises isolément ou selon toute combinaison techniquement admissible :
- l'étape de lancement est réalisée une seule fois pour chaque unité de gestion et à la suite de la première itération de l'étape d'échange pour l'unité de gestion,
- si lors de l'étape de comparaison les deuxième et troisième identifiants sont identiques, le procédé comprend l'étape suivante :
   - la réinitialisation à une valeur initiale prédéterminée du compteur temporel de l'unité de gestion ayant le premier identifiant déterminé, le compteur temporel redémarrant à la valeur initiale prédéterminée et la valeur initiale prédéterminée étant inférieure strictement à la valeur maximale,
- lors de l'étape d'échange, chaque trame comprend le premier identifiant de l'unité de gestion échangeant la trame,
- lors de l'étape de comparaison, seul le deuxième identifiant compris dans la trame la plus récente échangée par l'unité de gestion ayant le premier identifiant déterminé, est comparé avec le troisième identifiant,
- à la suite de l'étape d'échange, le procédé comprend pour chaque trame les étapes suivantes :
   - la mémorisation des données échangées,
   - l'association du premier identifiant de l'unité de gestion échangeant la trame aux données mémorisées,
   et, lors de l'étape d'autorisation, les données auxquelles l'accès est autorisé sont les données mémorisées associées au premier identifiant déterminé,
- chaque premier identifiant est une adresse MAC et chaque deuxième et troisième identifiants est une adresse IP.

L'invention concerne en outre, un produit programme d'ordinateur comportant des instructions logicielles, les instructions logicielles mettant en oeuvre un procédé tel que décrit précédemment, lorsque les instructions logicielles sont exécutées par un ordinateur.

L'invention concerne également un support d'informations sur lequel est mémorisé un produit programme d'ordinateur tel que décrit précédemment.

L'invention sera mieux comprise et d'autres avantages de l'invention apparaîtront plus clairement à la lumière de la description détaillée qui va suivre, donnée uniquement à titre d'exemple non limitatif et faite en référence aux figures annexées sur lesquelles :
- la figure 1 est une représentation schématique d'un système de contrôle de l'accès à des données relatives à deux installations électriques, le système étant conforme à un premier mode de réalisation et comprenant une unité de gestion de chaque installation électrique et une plateforme relais entre lesquelles les données sont échangées ;
- la figure 2 est un organigramme d'un exemple de mise en oeuvre d'un procédé de contrôle de l'accès aux données par le système de la figure 1, en ce qui concerne les échanges de données entre les unités de gestion et la plateforme relais ; et
- la figure 3 est un organigramme d'un exemple de mise en oeuvre d'un procédé de contrôle de l'accès aux données par le système de la figure 1, en ce qui concerne le traitement d'une requête d'accès aux données reçues par la plateforme relais.

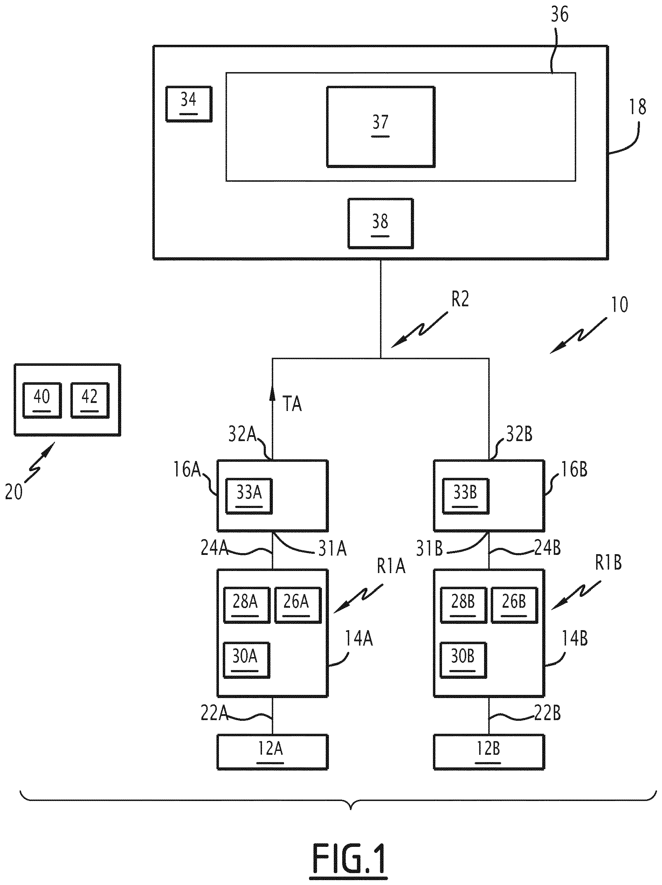

Un système 10 de contrôle de l'accès à des données DA et DB relatives à deux installations électriques 12A et 12B est illustré à la figure 1.

Dans la suite de la description, les lettres A et B, lorsqu'elles sont présentes dans les signes de référence, désignent deux éléments distincts globalement identiques, qui sont distingués l'un de l'autre par l'utilisation des termes « premier » et « deuxième ».

Le système de contrôle 10 comprend, pour chaque installation électrique 12A, 12B, une première 14A respectivement deuxième 14B unité de gestion et une première 16A respectivement deuxième 16B passerelle de communication.

Le système de contrôle comprend également une plateforme relais 18 et un terminal de communication 20.

Chaque installation électrique 12A, 12B est, par exemple, une installation domotique.

Chaque installation électrique 12A, 12B comprend des équipements électriques, tels qu'un système d'alarme et/ou des stores électriques et/ou des systèmes d'éclairage et/ou des appareils électroménagers et/ou des machines électriques industrielles et/ou des compteurs d'énergie, et/ou des détecteurs de présence et/ou d'incendie et/ou des systèmes de domotique.

Dans la suite, seule la première unité de gestion 14A est décrite, les mêmes remarques s'appliquant pour la deuxième unité de gestion 14B. De même, seule la passerelle de communication 16A est décrite, les mêmes remarques s'appliquant pour la deuxième passerelle de communication 16B. Les première 14A et deuxième 14B unités de gestion, de même que les première 16A et deuxième 16B passerelles de communication 14A sont identiques et comprennent les mêmes éléments, qui portent les mêmes références, dans lesquelles la lettre B remplace la lettre A.

La première unité de gestion 14A est associée de manière bijective à un premier identifiant Id1. Ainsi, le premier identifiant Id1 de la première unité de gestion 14A est unique pour l'unité de gestion 14A, 14B considérée.

En d'autres termes, la deuxième unité de gestion 14B est associée à un premier identifiant Id1 différent du premier identifiant Id1 de la première unité de gestion 14A.

Le premier identifiant Id1 est, par exemple, une adresse MAC (*de l'anglais, Media Access Control*), qui signifie contrôle d'accès au support, également appelée adresse physique.

La première unité de gestion 14A est reliée à l'installation électrique 12A par un premier conducteur électrique 22A.

La première unité de gestion 14A est reliée à la première passerelle de communication 16A par un autre conducteur électrique 24A.

La première unité de gestion 14A appartient à un premier réseau local de communication R1A.

Le premier réseau local R1A est un réseau informatique tel que les terminaux qui appartiennent au réseau local s'envoient des trames au niveau de la couche de liaison sans utiliser d'accès à internet. Le premier réseau local R1A est, par exemple, un réseau LAN (*de l'anglais local area network*), qui signifie réseau local.

La plateforme relais 18 appartient à un réseau global de communication R2.

Le réseau global de communication R2 est le réseau Internet. Le réseau global R2 diffère du premier réseau local R1A, dans le sens où le réseau global R2 couvre une zone géographique supérieure au premier réseau local R1A. Le réseau global R2 est, par exemple, un réseau WAN (*de l'anglais wide area network*), qui signifie réseau étendu.

La première unité de gestion 14A comprend une première mémoire 26A, une première unité de récupération 28A et une première unité de communication 30A.

La première mémoire 26A est propre à mémoriser des données comme le premier identifiant Id1 de la première unité de gestion 14A.

La première unité de récupération 28A est configurée pour récupérer les données DA relatives à l'installation électrique 12A, qui sont alors mémorisées dans la première mémoire 26A.

Les données DA relatives à l'installation électrique 12A comprennent, par exemple, des valeurs de consommation électrique de l'installation électrique 12A.

La première unité de récupération 28A comprend, par exemple, un capteur de mesure de la consommation électrique de l'installation électrique 12A.

En variante, les données DA relatives à l'installation électrique 12A comprennent également, par exemple, des variables d'état de fonctionnement des équipements électriques de l'installation électrique 12A et/ou des variables de paramétrage des équipements électriques.

La première unité de communication 30A est configurée pour échanger avec la plateforme relais 18, une première trame TA comprenant les données DA récupérées par la première unité de récupération 24A et un deuxième identifiant Id2, sur le réseau global R2, de la passerelle de communication 16A par laquelle la première trame TA transite.

En d'autres termes, la première trame TA comprend, lorsqu'elle est reçue par la plateforme relais 18, un en-tête comprenant le deuxième identifiant Id2 de la première passerelle de communication 16A et un ensemble de données comprenant les données DA relatives à l'installation électrique 12A récupérées par la première unité de récupération 28A.

En effet, lorsque la première trame TA circule de l'unité de gestion 14A vers la plateforme relais 18, la passerelle de communication 16A est propre à modifier l'en-tête de la trame pour y incorporer le deuxième identifiant Id2 de la première passerelle de communication 16A.

Avantageusement, la première trame TA comprend le premier identifiant Id1 de la première unité de gestion 14A échangeant la première trame TA. En d'autres termes, avantageusement, l'ensemble de données comprend également le premier identifiant Id1 de la première unité de gestion 14A.

Avantageusement encore, la première trame TA comprend également un identifiant global I2, sur le réseau global R2, de la plateforme relais 18.

La première passerelle de communication 16A forme une interface de communication entre le premier réseau local R1A et le réseau global R2.

La première passerelle de communication 16A relie la plateforme relais 18 et la première unité de gestion 14A.

La première passerelle de communication 16A comprend un premier port de communication local 31A relié au réseau local R1A et un premier port de communication global 32A relié au réseau global R2.

La première passerelle de communication 16A est associée à un deuxième identifiant Id2, sur le réseau global R2, de la première passerelle de communication 16A, ainsi qu'à un identifiant local de la première passerelle de communication 16A sur le réseau local R1A.

La première passerelle de communication 16A est, par exemple, un routeur.

La première passerelle de communication 16A comprend une première unité de routage 33A des messages, également appelés trames ou paquets, reçus par la première passerelle de communication 16A, sur les premier ports de communication local 31A et global 32A. La première unité de routage 33A est propre à mémoriseer, par exemple, une table de routage.

L'unité de routage 33A est configurée pour transmettre la trame TA vers le réseau global R2. Plus précisément, la table de routage associe à l'identifiant global I2 de la plateforme relais 18, le premier port de communication global 32A.

La plateforme relais 18 comprend un dispositif informatique comportant un processeur 34 et un support d'informations 36 mémorisant des instructions de codes de programmation.

La plateforme relais 18 comprend également un élément de communication 38.

La plateforme relais 18 est associée à l'identifiant global I2. En d'autres termes, la plateforme relais a comme identifiant sur le réseau global R2, l'identifiant global I2.

Le processeur 34 est propre à exécuter les instructions de code de programmation mémorisées par le support d'informations 36.

Les instructions de code de programmation mémorisées par le support d'informations 36 forment un programme d'ordinateur 37 apte à être exécuté ou mis en oeuvre par un ordinateur. L'ordinateur correspond, par exemple, au processeur 34.

Le programme d'ordinateur 37 est propre, lorsqu'il est exécuté, à mémoriser des données, telles que les données DA, DB relatives à chaque installation électrique 12A, 12B échangées via chaque trame TA, TB, le deuxième identifiant Id2 de la passerelle de communication 16A, 16B par laquelle chaque trame TA, TB transite, et le premier identifiant Id1 de l'unité de gestion 14A, 14B ayant transmis chaque trame TA, TB.

Le programme d'ordinateur 37 est également propre, lorsqu'il est exécuté, à traiter une requête M1, d'accès aux données relatives aux installations électriques 12A et 12B échangées avec les première 14A et deuxième 14B unités de gestion, émise par le terminal de communication 20. Le programme d'ordinateur 37 est notamment configuré pour autoriser ou non, au terminal de communication 20, l'accès aux données DA, DB relatives aux installations électriques 12A, 12B.

L'élément de communication 38 est configuré pour communiquer avec les première 24A et deuxième 24B unités de gestion et notamment avec les première 26A et deuxième 26B unités de communication afin de récupérer chaque trame TA, TB.

L'élément de communication 38 est également configuré pour communiquer avec le terminal de communication 20 pour recevoir la requête d'accès M1, mais également pour transmettre au terminal de communication 20 les données DA, DB requises via la requête d'accès M1, lorsque l'accès aux données DA, DB est autorisé.

Le terminal de communication 20 est configuré pour communiquer avec la plateforme relais 18.

Le terminal de communication 20 est propre à être connecté à l'un des premier R1A et deuxième R1B réseaux locaux et/ou au réseau global R2.

Plus précisément, le terminal de communication 20 est configuré pour communiquer à la plateforme relais 18 la requête M1 d'accès aux données DA et DB relatives aux installations électriques 12A et 12B, échangées par l'une des première 14A et deuxième 14B unités de gestion avec la plateforme relais 18. La requête d'accès M1 comprend un paramètre d'accès P qui dépend du premier identifiant Id1 de l'unité de gestion 14A, 14B et un troisième identifiant Id3, sur le réseau global R2, d'un élément appartenant au réseau global R2 et étant à l'origine de la transmission de la requête d'accès M1 sur le réseau global R2.

Lorsque le terminal de communication 20 est connecté au premier réseau local R1A, la requête d'accès M1 est transmise à la première passerelle de communication 16A qui émet alors la requête d'accès M1 sur le premier port de communication global 32A, à destination de la plateforme relais 18.

Lorsque le terminal de communication 20 est connecté au réseau global R2, la requête d'accès M1 est transmise directement sur le réseau global R2, à destination de la plateforme relais 18, puisque dans cette configuration le terminal de communication 20 appartient au réseau global R2.

Le terminal de communication 20 comprend un organe de mémorisation 40, et une unité de communication 42.

L'organe de mémorisation 40 est propre à mémoriser des données. Les données sont généralement propres à l'une des unités de gestion 14A, 14B, et sont telles que, le paramètre d'accès P dépendant du premier identifiant Id1 de l'une des première 14A et deuxième 14B unités de gestion. Le paramètre d'accès P est, par exemple, un mot de passe associé, au niveau de la plateforme relais 18, au premier identifiant Id1 de l'une des unités de gestion 14A, 14B.

Avantageusement, l'organe de mémorisation 40 est propre à mémoriser des données supplémentaires, telles qu'un identifiant local du terminal de communication 20, sur le premier R1A ou deuxième R1B réseau local, lorsque le terminal de communication 20 est connecté à l'un des premier R1A et deuxième R1B réseaux locaux R1A, R1B et propre à transmettre la requête d'accès M1 sur le réseau local R1A, R1B.

De même, l'organe de mémorisation 40 est propre à mémoriser des données supplémentaires, telles qu'un identifiant global du terminal de communication 20 sur le réseau global R2, lorsque le terminal de communication 20 est connecté au réseau global R2 et propre à transmettre la requête d'accès M1 sur le réseau global R2.

L'unité de communication 44 est propre à communiquer à la plateforme relais 18 la requête d'accès M1 aux données DA, DB échangées par la plateforme relais 18 avec l'une des première 14A et deuxième 14B unités de gestion. La requête d'accès M1 comprend le paramètre d'accès P et le troisième identifiant Id3.

Comme évoqué ci-dessus, le troisième identifiant Id3 est l'identifiant du terminal de communication 20 sur le réseau global R2, lorsque le terminal de communication est connecté seulement au réseau global R2 et propre à transmettre la requête d'accès M1 sur le réseau global R2.

Par ailleurs, le troisième identifiant Id3 est, lorsque le terminal de communication 20 est connecté à l'un des premier R1A et deuxième R1B réseaux locaux, le deuxième identifiant de la passerelle de communication 16A, 16B faisant l'interface entre le réseau local R1A, R1B et la plateforme relais 18.

Les deuxièmes identifiants Id2 des première 16A et deuxième 16B passerelles de communication, ainsi que le troisième identifiants sont, par exemple, des adresses IP.

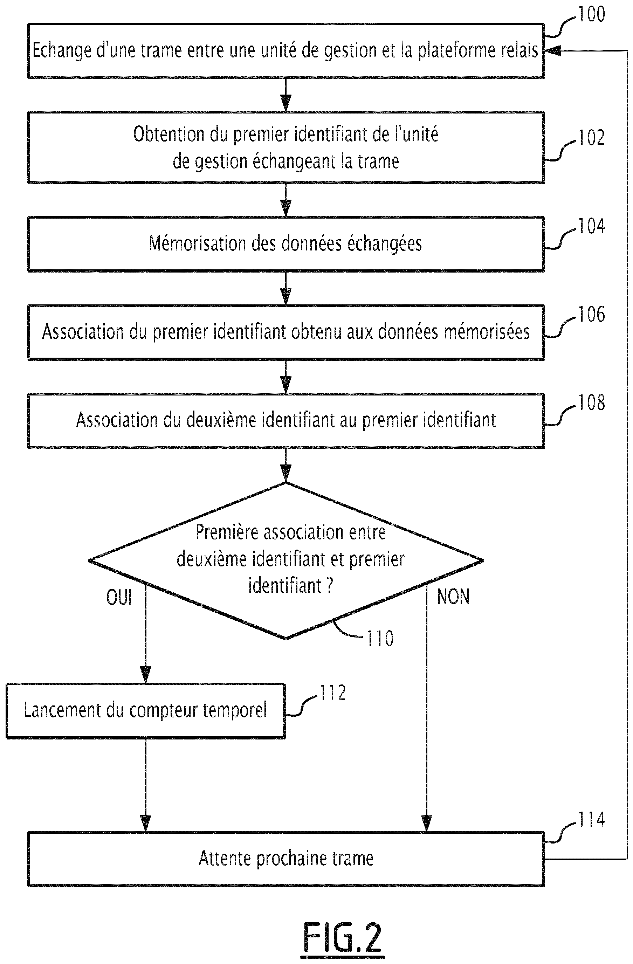

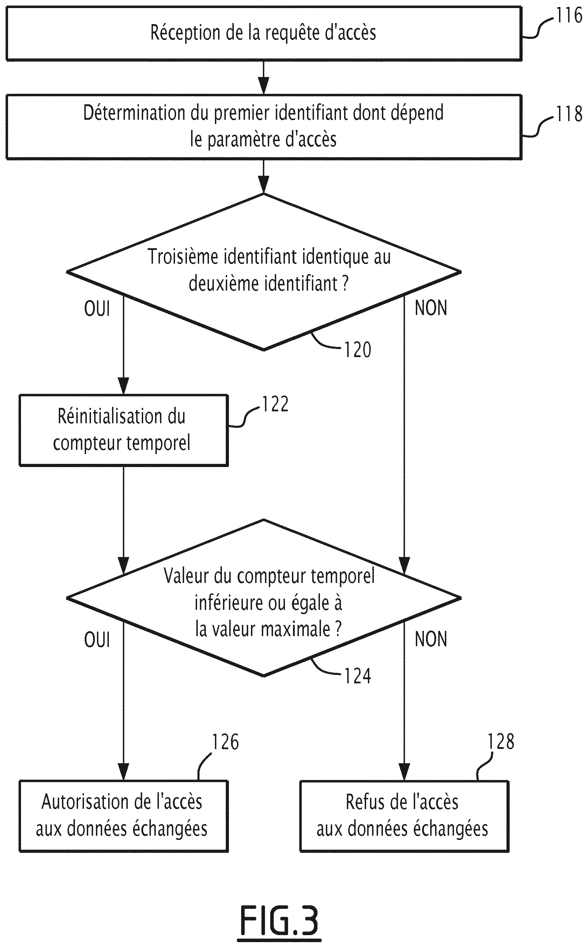

Un premier mode de fonctionnement du système 10 et notamment de la plateforme relais 18 va par la suite être présenté, grâce à la mise en oeuvre du procédé de contrôle de l'accès aux données présenté aux figures 2 et 3.

La figure 2 présente le procédé de contrôle de l'accès aux données par le système 10, en ce qui concerne les échanges de données entre la première unité de gestion 14A et la plateforme relais 18.

La figure 3 présente le procédé de contrôle de l'accès aux données par le système 10, en ce qui concerne le traitement d'une requête M1 d'accès aux données reçues par la plateforme relais 18.

Dans la suite de la présentation du procédé de contrôle, pour simplifier la description, le procédé de contrôle est présenté dans le cas où seule la première unité de gestion 14A transmet la première trame TA à la plateforme relais 18 et où la plateforme relais 18 reçoit une requête M1 d'accès aux données DA échangées avec l'unité de gestion 14A.

Le procédé s'applique à une pluralité d'unité de gestion 14A, 14B, qui transmettent une pluralité de trame TA, TB à la plateforme relais 18 et également à un ou plusieurs terminaux de communication, qui transmettent une ou plusieurs requêtes M1 d'accès aux données échangées par différentes unités de gestion 14A, 14B avec la plateforme relais 18.

Le procédé de contrôle décrit ci-après est mis en oeuvre lorsque le programme d'ordinateur 37 est exécuté par le processeur 34.

Lors d'une étape initiale d'échange 100, l'unité de gestion 14A échange la première trame TA, telle que décrite ci-dessus, avec la plateforme relais 18. Au cours de l'étape d'échange 100, la plateforme relais 18 détecte la réception de la première trame TA et est ainsi propre à accéder aux données DA relatives à l'installation électrique 12A, au deuxième identifiant Id2 de la première passerelle de communication 16A par laquelle la première trame TA transite et au premier identifiant Id1 de la première unité de gestion 14A.

La première unité de gestion 14A échange, par exemple, régulièrement, avec une période prédéterminée, la première trame TA avec la plateforme relais 18.

Avantageusement, à la suite de l'étape d'échange 100, les données DA relatives à l'installation électrique 12A échangées sont supprimées de la première mémoire 26A.

Lors d'une étape d'obtention 102, le premier identifiant Id1 de la première unité de gestion 14A échangeant la première trame TA est récupéré dans la première trame TA. En effet, dans le cas présenté, où la première trame TA comprend le premier identifiant Id1 de la première unité de gestion 14A, il suffit d'extraire le premier identifiant Id1 de la trame TA. Le premier identifiant Id1 est, par exemple, à une position prédéterminée dans la première trame TA. La première unité de gestion 14A ayant transmis la première trame TA est alors identifiée par la plateforme relais 18.

Ensuite, lors d'une étape de mémorisation 104, le support d'informations 36 mémorise les données DA relatives à l'installation électrique 12A comprise dans la première trame TA échangée. La plateforme relais 18 est alors propre à autoriser l'accès ou non, pour le terminal de communication 20, aux données DA mémorisées.

Avantageusement, lors de l'étape de mémorisation 104, le support d'informations 36 mémorise le premier identifiant Id1 obtenu à l'étape d'obtention 102 et le deuxième identifiant Id2 compris dans la première trame TA.

Lors d'une première étape d'association 106, le premier identifiant obtenu à l'étape d'obtention 102 est associé aux données DA mémorisées à l'étape 104. Ainsi, le terminal de communication 20 est propre à requérir l'accès aux données mémorisées à partir de la connaissance du premier identifiant Id1 ou, plus généralement, du paramètre d'accès P relatif au premier identifiant Id1.

Lors de la première étape d'association 106, le support d'informations 36 mémorise, par exemple, une table d'association qui comprend les données DA relatives à l'installation électrique 12A reçues via la première trame TA, auxquelles est associé le premier identifiant Id1 de l'unité de gestion 14A ayant transmis ces données.

Lors d'une deuxième étape d'association 108, le deuxième identifiant Id2 de la première passerelle de communication 16A, compris dans la première trame TA, est associé au premier identifiant Id1 obtenu lors de l'étape d'obtention 102.

Avantageusement, lors de la deuxième étape d'association 108 un unique deuxième identifiant Id2 est associé à chaque premier identifiant Id1 différent. L'unique deuxième identifiant Id2 est le deuxième identifiant qui est compris dans la première trame TA la plus récemment échangée par l'unité de gestion ayant le premier identifiant obtenu.

Ensuite, au cours d'une étape d'identification 110, la plateforme relais 18 identifie si lors de la deuxième étape d'association 108, c'est la première fois qu'un deuxième identifiant de passerelle de communication est associé au premier identifiant Id1 obtenu. Une variable de comptage est, par exemple, associée à chaque premier identifiant lors de la deuxième étape d'association 108 et est incrémentée à chaque itération de la deuxième étape d'association 108 pour ledit premier identifiant.

Lors de l'étape d'identification 110, le processeur analyse, par exemple, si la variable de comptage associée au premier identifiant Id1 obtenu est supérieure à 1, dans l'exemple où la variable de comptage est initialement fixée à 0 et incrémentée de 1 à chaque itération de la deuxième étape d'association pour le premier identifiant obtenu.

Dans le cas où lors de l'étape d'identification 110, il est déterminé qu'il s'agit de la première itération de la deuxième étape d'association 108 pour le premier identifiant Id1 obtenu, le procédé comprend à la suite de l'étape d'identification 110, une étape de lancement 112 au cours de laquelle un premier compteur temporel CTA est lancé pour l'unité de gestion 14A ayant le premier identifiant Id1 obtenu. En d'autres termes, l'étape de lancement 112 est réalisée une seule fois pour la première unité de gestion 14A, à la suite de la première itération de l'étape d'association 108 pour la première unité de gestion 14A et donc notamment à la suite de la première itération de l'étape d'échange 100.

L'étape de lancement 112 est réalisée à partir d'un instant de référence différent pour chaque unité de gestion 14A, 14B, qui correspond, dans notre cas, à un instant d'identification d'une première association du premier identifiant Id1 obtenu à un deuxième identifiant Id2.

Puis, à la suite de l'étape de lancement 112, une étape d'attente 114 de la prochaine trame TA, TB par la plateforme relais 18 est exécutée. Lors de l'étape d'attente 114, la plateforme relais 18 attend que l'une des unités de gestion 14A, 14B échange avec la plateforme relais une trame TA, TB pour exécuter le procédé de la figure 2.

Dans le cas contraire, à la suite de l'étape d'identification 110, l'étape d'attente 114 est directement réalisée.

La figure 3 présente le fonctionnement du procédé de contrôle suite à la réception de la requête M1 d'accès aux données DA échangées entre la première unité de gestion 14A et la plateforme relais 18.

Lors d'une étape de réception 116, la plateforme relais 18 détecte la réception de la requête M1 d'accès aux données DA échangées avec l'unité de gestion 14A. La requête d'accès M1 provient du terminal de communication 20 et comprend le paramètre d'accès P dépendant du premier identifiant Id1 de la première unité de gestion 14A et le troisième identifiant, sur le réseau global R2, de l'élément appartenant au réseau global R2 et étant à l'origine de la transmission de la requête M1 sur le réseau global R2.

Plus précisément, la requête M1 comprend, d'une part, un en-tête, dans lequel est compris le troisième identifiant, et, d'autre part, un ensemble de données comprenant le paramètre d'accès P dépendant du premier identifiant Id1 de la première unité de gestion 14A.

A la suite de l'étape de réception 116, la plateforme relais 18 dispose des informations nécessaires à l'identification des données DA échangées auxquelles le terminal de communication 20 requiert l'accès.

Ensuite, lors d'une étape de détermination 118, la plateforme relais 18 détermine le premier identifiant Id1 dont dépend le paramètre d'accès P compris dans la requête M1 reçue. Le support d'informations 36 mémorise, par exemple, une table d'association associant à chaque premier identifiant Id1 un paramètre d'accès P différent. Ainsi, lors de l'étape de détermination 118, il est recherché dans la table d'association le premier identifiant correspondant aux paramètres d'accès P reçus.

A la suite de l'étape de détermination 118, la plateforme relais 18 est apte à déterminer le premier identifiant Id1 de l'unité de gestion 14A, 14B qui échange les données DA, DB, que souhaite récupérer un utilisateur du terminal de communication 20.

Lors d'une étape de comparaison 120, la plateforme relais 18, et notamment le processeur 34, compare le troisième identifiant Id3 compris dans la requête d'accès M1 avec le deuxième identifiant Id2 associé, dans la table d'association, au premier identifiant Id1 déterminé à l'étape de détermination 118. En d'autres termes, le troisième identifiant Id3 est comparé avec le deuxième identifiant Id2 compris dans la trame TA, TB la plus récente échangée par l'unité de gestion 14A ayant le premier identifiant déterminé à l'étape de détermination 118. Plus précisément, lors de l'étape de comparaison 120, le processeur 34 détermine si le troisième identifiant Id3 compris dans la requête M1 est identique au deuxième identifiant Id2 associé, dans la table d'association, au premier identifiant Id1 déterminé.

Comme suite à l'étape de comparaison 120, le procédé comprend, lorsqu'il est déterminé à l'étape de comparaison 120 que le troisième identifiant Id3 est identique au deuxième identifiant Id2, une étape de réinitialisation 122, à une valeur initiale prédéterminée V1, du premier compteur temporel CTA de l'unité de gestion 14A ayant le premier identifiant Id1 déterminé à l'étape 118. Le premier compteur temporel CTA redémarre alors à la valeur initiale prédéterminée V1. La valeur initiale V1 est, par exemple, égale à 0 secondes.

Ainsi, lorsque le terminal de communication 20 et l'unité de gestion 14A transmettant les données DA auxquelles le terminal de communication 20 souhaite avoir accès ont le même identifiant sur le réseau global R2, c'est-à-dire la même adresse IP, le premier compteur temporel CTA est réinitialisé.

En d'autres termes, lorsque le troisième identifiant de l'élément à l'origine de la transmission de la requête sur le réseau global R2 est identique au deuxième identifiant Id2 de la première passerelle de communication 16A par laquelle les données DA auxquelles l'utilisateur du terminal de communication 20 souhaite avoir accès transitent, le premier compteur temporel CTA est réinitialisé. En effet, dans ce cas, le terminal de communication 20 est connecté au premier réseau local R1A et la requête d'accès M1 et la première trame TA passent par la première passerelle de communication 16A. La première passerelle de communication 16A modifie alors l'en-tête de la requête d'accès M1 et de la première trame TA, pour y incorporer le deuxième identifiant Id2 de la première passerelle de communication 16A, de sorte que dans la requête d'accès M1 le troisième identifiant Id3 est égal à l'identifiant Id2 de la première passerelle de communication 16A.

A la suite de l'étape de réinitialisation 122, lors d'une deuxième étape de comparaison 124, la valeur du premier compteur temporel CTA est comparée à une valeur maximale prédéterminée V2. Plus précisément, lors de la deuxième étape de comparaison 124, le processeur 34 détermine si la valeur du premier compteur temporel CTA est inférieure ou égale à la valeur maximale V2.

La valeur maximale V2 est, par exemple, égale à 500 heures.

Plus généralement, la valeur initiale V1 est strictement inférieure à la valeur maximale V2.

Dans le cas contraire, à la suite de l'étape de comparaison 120, la deuxième étape de comparaison 124 est directement exécutée.

Par ailleurs, si lors de la deuxième étape de comparaison 124, la valeur du premier compteur temporel CTA est inférieure ou égale à la valeur maximale prédéterminée V2, le procédé comprend à la suite de l'étape de comparaison 124, une étape d'autorisation 126, pour le terminal de communication ayant émis la requête d'accès M1, de l'accès aux données mémorisées DA, associées au premier identifiant Id1 déterminé à l'étape de détermination 118. Un message comprenant les données mémorisées DA, associées au premier identifiant Id1 déterminé, est, par exemple, transmis par la plateforme relais 18 au terminal de communication 20.

En d'autre termes, l'accès aux données DA incluses dans chaque trame TA échangée par l'unité de gestion 14A ayant le premier identifiant Id1 déterminé est autorisé, si la valeur du compteur temporel CTA, CTB de l'unité de gestion ayant le premier identifiant Id1 déterminé est inférieure ou égale à la valeur maximale prédéterminée V2.

Dans le cas contraire, le procédé comprend, à la suite de la deuxième étape de comparaison 124, une étape de refus 128 de l'accès aux données mémorisées DA associées au premier identifiant déterminé. Un message de refus de l'accès est, par exemple, transmis par la plateforme relais 18 au terminal de communication 20. En variante, un message explicatif est, par exemple, transmis par la plateforme relais 18 au terminal de communication 20. Le message explicatif indique, par exemple, que le terminal de communication 20 doit être connecté au réseau local R1A auquel appartient l'unité de gestion 14A ayant transmis les données mémorisées DA, afin d'être autorisé à avoir accès aux données mémorisées DA.

Dans le procédé de contrôle et le système de contrôle décrits précédemment, le fait d'utiliser un compteur temporel CTA, CTB réinitialisé en fonction de la comparaison du troisième identifiant avec le deuxième identifiant, permet d'autoriser l'accès aux données DA, DB échangées entre l'une des unités de gestion 14A, 14B et la plateforme relais 18 seulement si le terminal de communication 20 se connecte régulièrement au réseau local auquel appartient l'unité de gestion 14A, 14B, afin de requérir l'accès aux données DA, DB échangées par l'unité de gestion 14A, 14B.

Ainsi, la sécurité de l'accès aux données DA, DB est améliorée. En effet, si le terminal de communication 20 n'a plus accès au réseau local R1A, R1B, l'accès, à partir du terminal de communication 20, aux données DA, DB échangées ne sera plus possible à partir du moment où la valeur du compteur temporel CTA, CTB aura atteint la valeur maximale V2. En effet, le compteur temporel CTA, CTB ne sera plus réinitialisé et l'accès aux données DA, DB échangées sera refusé dès que le compteur temporel aura atteint la valeur maximale V2.

En variante, le système de contrôle 10 est configuré pour que le terminal de communication et notamment l'utilisateur du terminal de communication 20 ait accès aux données DA, DB échangées, seulement lorsqu'il se connecte à la plateforme relais 18 via le réseau local R2. Dans cette variante, aucun compteur temporel n'est utilisé et l'accès aux données échangées DA, DB est autorisé seulement lorsque, lors de l'étape de comparaison 120, le troisième identifiant est identique au deuxième identifiant. Dans cette variante, les étapes d'identification 110, de lancement 112, de réinitialisation 122 et de comparaison 124 ne sont pas réalisées. Les étapes d'autorisation 126 et de refus 128 sont alors fonction du résultat de l'étape de comparaison 120.

Selon une autre variante, suite à l'étape d'autorisation 126, le terminal de communication est propre à envoyer une requête de modification des données DA, DB échangées entre l'une des unités de gestion et la plateforme relais, notamment lorsque les données sont, par exemple, des variables d'état de fonctionnement des équipements électriques de l'installation électrique 12A et/ou des variables de paramétrage des équipements électriques. La requête de modification comprend, par exemple, des données modifiées et le paramètre d'accès. Les données modifiées sont, par exemple, saisies par l'utilisateur à partir d'une interface de saisie associée au terminal de communication. Dans cette variante, la plateforme relais 18 transmet alors, à l'unité de gestion 16A, dont le premier identifiant dépend du paramètre d'accès P, les données modifiées. L'unité de gestion 14A configure alors les équipements de l'installation électrique 12A en fonction des données modifiées.

Selon une autre variante, l'étape de réinitialisation 122 n'est pas réalisée et, lors de l'étape d'autorisation 126, l'accès aux données est autorisé si le troisième identifiant est identique au deuxième identifiant lors de l'étape de comparaison 120 ou si la valeur du premier compteur temporel CTA est inférieure ou égale à la valeur maximale V2 lors de l'étape de comparaison 124. Dans le cas contraire, l'étape de refus 128 est réalisée et l'accès aux données est refusé.

Selon une autre variante, le système de contrôle 10 comprend une ou plus de deux unités de gestion, ainsi qu'une ou plus de deux passerelles de communication associée à une ou plus de deux installations électriques.

Les modes de fonctionnement et modes de réalisations décrits ci-dessus sont aptes à être combinés les uns aux autres, totalement ou partiellement, pour donner lieu à d'autres modes de réalisation de l'invention.

## Revendications

1. Procédé de contrôle de l'accès à des données (DA, DB) relatives à au moins une installation électrique (12A, 12B), échangées entre une unité de gestion (14A, 14B) respective de chaque installation électrique et une plateforme relais (18), la plateforme relais (18) appartenant à un réseau global de communication (R2) et chaque unité de gestion (14A, 14B) appartenant à un réseau local de communication (R1A, R1B) respectif, chaque unité de gestion (14A, 14B) ayant un premier identifiant (Id1) respectif, chaque unité de gestion (14A, 14B) étant reliée au réseau global de communication (R2) par une passerelle de communication (16A, 16B) respective ayant un deuxième identifiant (Id2) sur le réseau global de communication (R2), le procédé comprenant les étapes suivantes :
- l'échange (100) d'au moins une trame (TA, TB) entre chaque unité de gestion (14A, 14B) et la plateforme relais (18), chaque trame (TA, TB) comprenant les données (DA, DB) et le deuxième identifiant (Id2) de la passerelle de communication par laquelle la trame (TA, TB) transite,
- l'obtention (102) pour chaque trame (TA, TB) échangée du premier identifiant (Id1) de l'unité de gestion (14A, 14B) échangeant la trame,
- la réception (116) par la plateforme relais (18) d'une requête (M1) d'accès aux données (DA, DB) échangées avec la ou l'une des unités de gestion (14A, 14B), la requête (M1) provenant d'un terminal de communication (20) et comprenant un paramètre d'accès (P) dépendant du premier identifiant (Id1) de l'unité de gestion (14A, 14B) et un troisième identifiant (Id3), sur le réseau global (R2), d'un élément appartenant au réseau global (R2) et étant à l'origine de la transmission de la requête (M1) sur le réseau global (R2),
- la détermination (118) du premier identifiant (Id1) dont dépend le paramètre d'accès (P),
- la comparaison (120) du troisième identifiant (Id3) avec le deuxième identifiant (Id2) compris dans la ou au moins l'une des trames (TA, TB) échangées par l'unité de gestion (14A, 14B) ayant le premier identifiant (Id1) déterminé,
- l'autorisation (126) de l'accès, pour le terminal de communication (20), aux données (DA, DB) incluses dans chaque trame échangée par l'unité de gestion (14A, 14B) ayant le premier identifiant (Id1) déterminé, si lors de l'étape de comparaison (120) les deuxième (Id2) et troisième (Id3) identifiants sont identiques, le procédé comprenant pour chaque unité de gestion l'étape suivante :
- le lancement (112) d'un compteur temporel (CTA, CTB) respectif à partir d'un instant de référence respectif,
et, lors de l'étape d'autorisation (126), l'accès aux données (DA, DB) incluses dans chaque trame échangée par l'unité de gestion (14A, 14B) ayant le premier identifiant (Id1) déterminé est également autorisé au terminal de communication (20), si la valeur du compteur temporel (CTA, CTB) de l'unité de gestion (14A, 14B) ayant le premier identifiant (Id1) déterminé est inférieure ou égale à une valeur maximale prédéterminée (V2).

2. Procédé selon la revendication 1, dans lequel l'étape de lancement (112) est réalisée une seule fois pour chaque unité de gestion (14A, 14B) et à la suite de la première itération de l'étape d'échange pour l'unité de gestion (14A, 14B).

3. Procédé selon la revendication 1 ou 2, dans lequel, si lors de l'étape de comparaison (120) les deuxième (Id2) et troisième (Id3) identifiants sont identiques, le procédé comprend l'étape suivante :
- la réinitialisation (122) à une valeur initiale prédéterminée (V1) du compteur temporel (CTA, CTB) de l'unité de gestion (14A, 14B) ayant le premier identifiant (Id1) déterminé, le compteur temporel (CTA, CTB) redémarrant à la valeur initiale prédéterminée (V1) et la valeur initiale prédéterminée (V1) étant inférieure strictement à la valeur maximale (V2).

4. Procédé selon l'une quelconque des revendications 1 à 3, dans lequel, lors de l'étape d'échange (100), chaque trame (TA, TB) comprend le premier identifiant (Id1) de l'unité de gestion échangeant la trame (TA, TB).

5. Procédé selon l'une quelconque des revendications 1 à 4, dans lequel, lors de l'étape de comparaison (120), seul le deuxième identifiant (Id2) compris dans la trame (TA, TB) la plus récente échangée par l'unité de gestion (14A, 14B) ayant le premier identifiant (Id1) déterminé, est comparé avec le troisième identifiant (Id3).

6. Procédé selon l'une quelconque des revendications 1 à 5, dans lequel, à la suite de l'étape d'échange (100), le procédé comprend pour chaque trame (TA, TB) les étapes suivantes :
- la mémorisation (104) des données (DA, DB) échangées,
- l'association (106) du premier identifiant de l'unité de gestion échangeant la trame (TA, TB) aux données (DA, DB) mémorisées.
et, dans lequel, lors de l'étape d'autorisation (126), les données (DA, DB) auxquelles l'accès est autorisé sont les données mémorisées associées au premier identifiant (Id1) déterminé.

7. Procédé selon l'une quelconque des revendications 1 à 6, dans lequel chaque premier identifiant (Id1) est une adresse MAC et chaque deuxième (Id2) et troisième (Id3) identifiants est une adresse IP.

8. Produit programme d'ordinateur comportant des instructions logicielles, les instructions logicielles mettant en oeuvre un procédé selon l'une quelconque des revendications 1 à 7, lorsque les instructions logicielles sont exécutées par un ordinateur.

9. Support d'informations (36) sur lequel est mémorisé un produit programme d'ordinateur selon la revendication 8.

## Patentansprüche

1. Verfahren zur Kontrolle des Zugriffs auf Daten (DA, DB) über mindestens eine Elektroinstallation (12A, 12B), die zwischen einer jeweiligen Steuereinheit (14A, 14B) jeder Elektroinstallation und einer Relaisplattform (18) ausgetauscht werden, wobei die Relaisplattform (18) zu einem globalen Kommunikationsnetz (R2) gehört und jede Steuereinheit (14A, 14B) zu einem jeweiligen lokalen Kommunikationsnetz (R1A, R1B) gehört, wobei jede Steuereinheit (14A, 14B) eine erste jeweilige Kennung (Id1) aufweist, wobei jede Steuereinheit (14A, 14B) über eine jeweilige Kommunikationsschnittstelle (16A, 16B) mit einer zweiten Kennung (Id2) auf dem globalen Kommunikationsnetz (R2) an das globale Kommunikationsnetz (R2) angeschlossen ist, wobei das Verfahren die Schritte umfasst:
- Austauschen (100) mindestens eines Frames (TA, TB) zwischen jeder Steuereinheit (14A, 14B) und der Relaisplattform (18), wobei jeder Frame (TA, TB) die Daten (DA, DB) und die zweite Kennung (Id2) der Kommunikationsschnittstelle, die der Frame (TA, TB) durchläuft, umfasst,
- Einholen (102) der ersten Kennung (Id1) der den Frame austauschenden Steuereinheit (14A, 14B) für jeden ausgetauschten Frame (TA, TB);
- Empfangen (116) einer Zugriffsanfrage (M1) für die mit der mindestens einen Steuereinheit (14A, 14B) ausgetauschten Daten (DA, DB) durch die Relaisplattform (18), wobei die Anfrage (M1) von einem Kommunikationsendgerät (20) herrührt und umfasst: einen Zugriffsparameter (P), der von der ersten Kennung (Id1) der Steuereinheit (14A, 14B) abhängt, und eine dritte Kennung (Id3) eines zum globalen Netz (R2) gehörenden Elements am Ursprung der Übertragung der Anfrage (M1) auf dem globalen Netz (R2);
- Ermitteln (118) der ersten Kennung (Id1), von der der Zugriffsparameter (P) abhängt,
- Abgleichen (120) der dritten Kennung (Id3) mit der zweiten Kennung (Id2), die in mindestens einem der von der Steuereinheit (14A, 14B) mit der ermittelten ersten Kennung (Id1) ausgetauschten Frames (TA, TB) enthalten ist;
- Zulassen (126) des Zugriffs durch das Kommunikationsendgerät (20) auf die Daten (DA, DB), die in jedem Frame enthalten sind, die von der Steuereinheit (14A, 14B) mit der ermittelten ersten Kennung (Id1) ausgetauscht werden, wenn beim Abgleich (120) die zweite (Id2) und dritte (Id3) Kennungen identisch sind,
wobei das Verfahren für jede Steuereinheit folgenden Schritt umfasst:
- Starten (112) eines jeweiligen Zeitzählers (CTA, CTB) ab einen jeweiligen Bezugszeitpunkt,
wobei beim Zulassen (126) der Zugriff auf die Daten (DA, DB), die in jedem Frame enthalten sind, der von der Steuereinheit (14A, 14B) mit der ermittelten ersten Kennung (Id1) ausgetauscht wird, wird auch dem Kommunikationsendgerät (20) gestattet, wenn der Wert des Zeitzählers (CTA, CTB) der Steuereinheit (14A, 14B) mit der ermittelten ersten Kennung (Id1) kleiner oder gleich einem vorgegebenen Höchstwert (V2) ist.

2. Verfahren nach Anspruch 1, wobei der Schritt des Startens (112) für jede Steuereinheit (14A, 14B) einmal ausgeführt wird, und zwar im Anschluss an die erste Iteration des Austausches für die Steuereinheit (14A, 14B).

3. Verfahren nach Anspruch 1 oder 2, wobei, wenn beim Abgleich (120) die zweite (Id2) und dritte (Id3) Kennung identisch sind, das Verfahren den Schritt umfasst:
- Zurücksetzen (122) des Zeitzählers (CTA, CTB) der Steuereinheit (14A, 14B) mit der ermittelten ersten Kennung (Id1) auf einen vorgegebenen Ausgangswert (V1), wobei der Zeitzähler (CTA, CTB) beim vorgegebenen Ausgangswert (V1) neu startet und der vorgegebene Ausgangswert (V1) strikt kleiner ist als der Höchstwert (V2).

4. Verfahren nach einem der Ansprüche 1 - 3, wobei beim Austausch (100) jeder Frame (TA, TB) die erste Kennung (Id1) der Steuereinheit, die den Frame (TA, TB) austauscht, umfasst.

5. Verfahren nach einem der Ansprüche 1 - 4, wobei beim Abgleich (120) nur die zweite Kennung (Id2), die im Frame (TA, TB) enthalten ist, der von der Steuereinheit (14A, 14B) mit der ermittelten Kennung (Id1) zuletzt ausgetauscht wurde, mit der dritten Kennung (Id3) abgeglichen wird.

6. Verfahren nach einem der Ansprüche 1 - 5, wobei im Anschluss an den Austausch (100) das Verfahren für jeden Frame (TA, TB) die Schritte umfasst:
- Speichern (104) der ausgetauschten Daten (DA, DB),
- Zuordnen (106) der ersten Kennung der den Frame (TA, TB) austauschenden Steuereinheit zu den gespeicherten Daten (DA, DB),
und wobei beim Zulassen (126) die Daten (DA, DB), auf die der Zugriff zugelassen wird, die gespeicherten Daten sind, die der ermittelten ersten Kennung (Id1) zugeordnet sind.

7. Verfahren nach einem der Ansprüche 1 - 6, wobei jede erste Kennung (Id1) eine MAC-Adresse ist und jede zweite (Id2) und dritte (Id3) Kennung eine IP-Adresse ist.

8. Computerprogrammprodukt, umfassend Softwarebefehle, die bei Ausführung durch einen Computer ein Verfahren nach einem der Ansprüche 1 - 7 ausführen.

9. Datenträger (36), auf dem ein Computerprogrammprodukt nach Anspruch 8 gespeichert ist.

## Claims

1. A method of controlling access to data (DA, DB) relative to at least one electrical installation (12A, 12B), exchanged between a respective management unit (14A, 14B) of each electrical installation and a relay platform (18), the relay platform (18) belonging to a global communication network (R2) and each management unit (14A, 14B) belonging to a respective local communication network (R1A, R1B), each management unit (14A, 14B) having a respective first identifier (Id1), each management unit (14A, 14B) being connected to the global communication network (R2) by a respective communication gateway (16A, 16B) having a second identifier (Id2) on the global communication network (R2), the method including the following steps:
- exchanging (100) at least one frame (TA, TB) between each management unit (14A, 14B) and the relay platform (18), each frame (TA, TB) including the data (DA, DB) and the second identifier (Id2) of the communication gateway by which the frame (TA, TB) passes,
- obtaining (102), for each exchanged frame (TA, TB), the first identifier (Id1) of the management unit (14A, 14B) exchanging the frame,
- receiving (116), by the relay platform (18), a request (M1) to access the data (DA, DB) exchanged with the one of the management units (14A, 14B), the request (M1) coming from a communication terminal (20) and including an access parameter (P) depending on the first identifier (Id1) of the management unit (14A, 14B) and a third identifier (Id3), on the global network (R2), of an element belonging to the global network (R2) and being at the origin of the transmission of the request (M1) on the global network (R2),
- determining (118) the first identifier (Id1) on which the access parameter (P) depends,
- comparing (120) the third identifier (Id3) with the second identifier (Id2) comprised in the or at least one of the frames (TA, TB) exchanged by the management unit (14A, 14B) having the determined first identifier (Id1),
- authorizing (126) access, for the communication terminal (20), to the data (DA, DB) included in each frame exchanged by the management unit (14A, 14B) having the determined first identifier (Id1) if, during the comparison step (120), the second (Id2) and third (Id3) identifiers are identical,
the method comprising, for each management unit, the following step:
- launching (112) a respective time counter (CTA, CTB) from a respective reference moment,
and, during the authorization step (126), the access to the data (DA, DB) included in each frame exchanged by the management unit (14A, 14B) having the determined first identifier (Id1) is also authorized for the communication terminal (20), if the value of the time counter (CTA, CTB) of the management unit (14A, 14B) having the determined first identifier (Id1) is less than or equal to a predetermined maximum value (V2).

2. The method according to claim 1, wherein the launching step (112) is carried out only once for each management unit (14A, 14B) and after the first iteration of the exchange step for the management unit (14A, 14B).

3. The method according to claim 1 or 2, wherein, if during the comparison step (120) the second (Id2) and third (Id3) identifiers are identical, the method comprises the following steps:
- resetting (122), at a predetermined initial value (V1), the time counter (CTA, CTB) of the management unit (14A, 14B) having the determined first identifier (Id1), the time counter (CTA, CTB) restarting at the predetermined initial value (V1) and the predetermined initial value (V1) being strictly less than the maximum value (V2).

4. The method according to any one of claims 1 to 3, wherein, during the exchange step (100), each frame (TA, TB) comprises the first identifier (Id1) of the management unit exchanging the frame (TA, TB).

5. The method according to any one of claims 1 to 4, wherein, during the comparison step (120), only the second identifier (Id2) comprised in the most recent frame (TA, TB) exchanged by the management unit (14A, 14B) having the determined first identifier (Id1) is compared with the third identifier (Id3).

6. The method according to any one of claims 1 to 5, wherein, after the exchange step (100), the method comprises, for each frame (TA, TB), the following steps:
- storing (104) the exchanged data (DA, DB),
- associating (106) the first identifier of the management unit exchanging the frame (TA, TB) with the stored data (DA, DB),
and, wherein, during the authorization step (126), the data (DA, DB) to which access is authorized are the stored data associated with the first determined identifier (Id1).

7. The method according to any one of claims 1 to 6, wherein each first identifier (Id1) is a MAC address and each second (Id2) and third (Id3) identifier is an IP address.

8. A computer program product including software instructions, the software instructions implementing a method according to any one of claims 1 to 7, when the software instructions are executed by a computer.

9. An information medium (36) on which a computer program product according to claim 8 is stored.
